# EUROPEAN PATENT APPLICATION

(11) **EP 3 048 351 A1**
(43) Date of publication of application: **27.07.2016**
(21) Application number: 15151735.6
(22) Date of filing: 20.01.2015
(51) Int. Cl.: F16K 51/02, F16K 3/18

(54) **Gate valve with linkage structure**

(71) Applicant: King Lai Hygienic Materials Co., Ltd., 30264 Zhubei City, Hsinchu County (TW)
(72) Inventor: Yang, Li-Chuan, Zhubei City, Hsinchu County (TW)
(74) Representative: Viering, Jentschura & Partner mbB Patent- und Rechtsanwälte

(57) **Abstract**

A gate valve with linkage structure includes at least a power cylinder (10), a valve body (20) having a valve opening (25); a gate assembly (30) in the valve body (20), having a main gate board (31) and an air-tight gate board (32) neighborly disposed, and connected with one end of the air-tight gate board (32) by at least one parallel linkage; and at least a press bar (40), with one end pivotally connected to the air-tight gate board (32) and the other end extending to form a press end (41). A linkage bar is pivotally connected to the press bar (40) and also pivotally connected to the main gate board (31). Therefore, the gate assembly (30) is driven to seal the valve opening (25); the air-tight gate board (32) moves away from the main gate board (31) with the linkage function; a sealing force is generated to keep the air-tightness between the air-tight gate board (32) and the valve opening (25).

## Description

### BACKGROUND OF THE INVENTION

### 1. Field of the Invention:

The present invention relates to seal structures of valve, and more particularly, to a vacuum valve driven by a linkage structure for sealing the air-tight valve board against the valve opening.

### 2. Description of the Related Art:

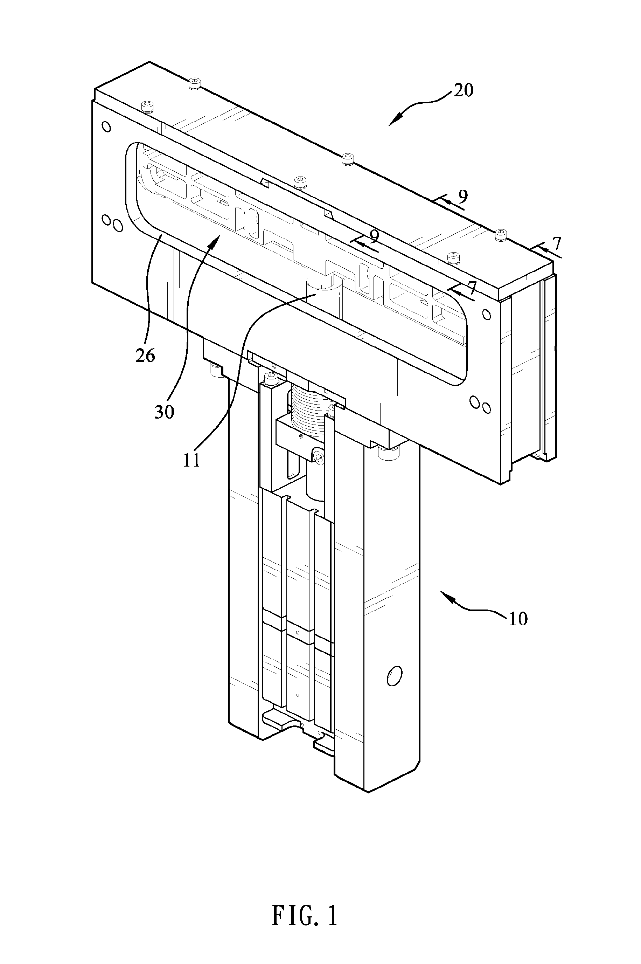

In TWI316997, a vacuum gate valve, as shown in Fig. 1a, 1b, and 1c, applies a control unit (such as a hydraulic and rotational unit), such that the valve stem is allowed to move freely along two directions, whereby the valve not only linearly moves along the valve stem axis (in parallel against the valve opening) for covering the valve opening, but also moves in vertical against the valve opening. Thus, when the valve board moves to the valve opening, the valve board is able to produce an addition sealing force upon the valve opening, so as to assure the air-tightness between the valve board and the valve opening.

However, such prior arts usually require a moving track controlling mechanism such as a slide rail disposed at the position of the hydraulic cylinder, wherein different sizes of valve boards and valve openings of vacuum valves with different models or sizes shall be calculated accurately and respectively, such that the valve board is allowed to move to the valve opening and firmly seal the valve opening. Otherwise, if the valve board is unable to cover the valve opening in parallel, the valve board possibly fails to appropriately seal the valve opening. As a result, the air-tightness of the vacuum valve is not achieved. Furthermore, after long period of being repeatedly used, wearing and accuracy deviation of the control unit may occur; in addition, the control unit is usually placed deep in the vacuum valve, causing the difficulty of maintenance.

### SUMMARY OF THE INVENTION

For improving aforementioned issues, the present invention discloses a gate valve with linkage structure. When the gate assembly moves to be in alignment with the valve opening, the air-tight gate board of the gate assembly is allowed to vertically move toward the valve opening by use of the linkage, such that the air-tight gate board firmly covers the valve opening.

The present invention provides valve gate with linkage structure, comprising:
at least a power cylinder, provided with a driving axle capable of axially moving;
a hollow valve body, with one end being an open end having a cover and the other end being a cylinder seat for receiving the power cylinder, an axle bore passing through the cylinder seat for the driving axle to penetrate into the valve body, wherein at least a valve opening is disposed on a lateral side of the valve body adjacent to the open end;
a gate assembly, disposed in the valve body and provided with a main gate board and an air-tight gate board neighboring on the main gate board, while the main gate board is connected to an end part of the air-tight gate board by use of at least a parallel linkage; and
at least a press bar, with one end pivotally connected to an end part of the air-tight gate board and the other end extending toward the cover to form a press end, wherein one end of a linkage bar is pivotally connected to the middle of the press bar, with the other end of the linkage bar pivotally connected to an end of the main gate board.

The main objective of the present invention is that the gate assembly is driven to move axially by the driving axle. When the gate assembly is in alignment with the valve opening, the press end of the press bar is pressed, and the air-tight gate board is moved away from the main gate board by the linkage effect produced by the press bar, the linkage bar, and the parallel linkage, whereby the air-tight gate board moves toward the valve opening to firmly seal the valve opening.

Another objective of the present invention is that the maintenance of the present invention is easy and time saving. During the maintenance, user needs only to open the cover and unscrew the screw members between the gate assembly and the driving axle, whereby the whole gate assembly is allowed to be taken out for repairing or replacing, thus greatly shorten the time cost for work suspension during the machine maintenance.

Still another objective of the present invention is that at least a stop member is disposed at the open end of the valve body. The stop member is in axial alignment with the press end of the press bar. When the gate assembly moves to be in alignment with the valve opening, the press end contacts the stop member, thereby driving the air-tight gate board to move while the stop member bears the counterforce of the pressing force. Therefore, the overall structural strength is enhanced; also, the maintenance of the stop member is easy.

Still another objective of the present invention is that at least a through groove is disposed on the main gate board. A roller bearing is pivotally disposed in the through groove, and the roller bearing partially protrudes on the lateral surface of the main gate board adjacent to the air-tight gate board. Furthermore, the air-tight gate board is concavely provided with a push groove for receiving the roller bearing. When the air-tight gate board is operated, the roller bearing works with the push groove, so as to disperse the counterforce born by the air-tight gate board, thereby preventing the air-tight gate board from being bent and deformed, also increasing the stability and service life of the product.

### BRIEF DESCRIPTION OF THE DRAWINGS

**Fig. 1** is a perspective view of the gate valve with linkage structure in accordance with the present invention.
**Fig. 2** is a partially exploded view of the gate valve with linkage structure in accordance with the present invention.
**Fig. 3** is a second partially exploded view of the gate valve with linkage structure in accordance with the present invention.
**Fig. 4** is a schematic view illustrating the installation process of the stop member provided by the present invention.
**Fig. 5** is a partially sectional view of the gate valve with linkage structure in accordance with the present invention.
**Fig. 6** is a partially sectional schematic view illustrating the operation process of the present invention.
**Fig. 7** is a second partially sectional schematic view illustrating the operation process of the present invention.
**Fig. 8** is a partially sectional schematic view illustrating the operation process of the roller bearing of the present invention.
**Fig. 9** is a second partially sectional schematic view illustrating the operation process of the roller bearing of the present invention.

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion.

Referring to **Fig. 1** to **Fig. 4****,** the present invention provides a gate valve with linkage structure, comprising at least a power cylinder **10,** a hollow valve body **20,** a gate assembly **30,** and at least a press bar **40.**

The power cylinder **10** is provided with a driving axle **11** capable of axially moving.

The hollow valve body **20** has one end thereof being an open end **21** provided with a cover **22,** and the other end thereof provided with a cylinder seat **23** for receiving the power cylinder **10.** An axle bore **24** passes through the cylinder seat **23** for the driving axle **11** to penetrate through and into the valve body **20.** Therein, at least a valve opening **25** is disposed on a lateral side of the valve body **20** adjacent to the open end **21,** and a hole **26** is disposed on the other lateral side of the valve body **20** opposite to the valve opening **25.**

The gate assembly **30** is disposed in the valve body **20** and provided with a main gate board **31** and an air-tight gate board **32** neighboring on the main gate board **31.** The main gate board **31** is screwed to an end of the driving axle **11** by use of a screw member **311.** Therein, the main gate board **31** is connected to an end part of the air-tight gate board **32** by use of at least a parallel linkage **33.** In a preferred embodiment, the main gate board **31** is connected with the air-tight gate board **32** by use of two parallel linkages **33** disposed between the two ends of the air-tight gate board **32;** also, a four-linkage structure is formed among the main gate board **31,** the two parallel linkages **33,** and the airtight gate board **32.** In a more preferred embodiment, the four-linkage structure forms a parallelogram linkage structure.

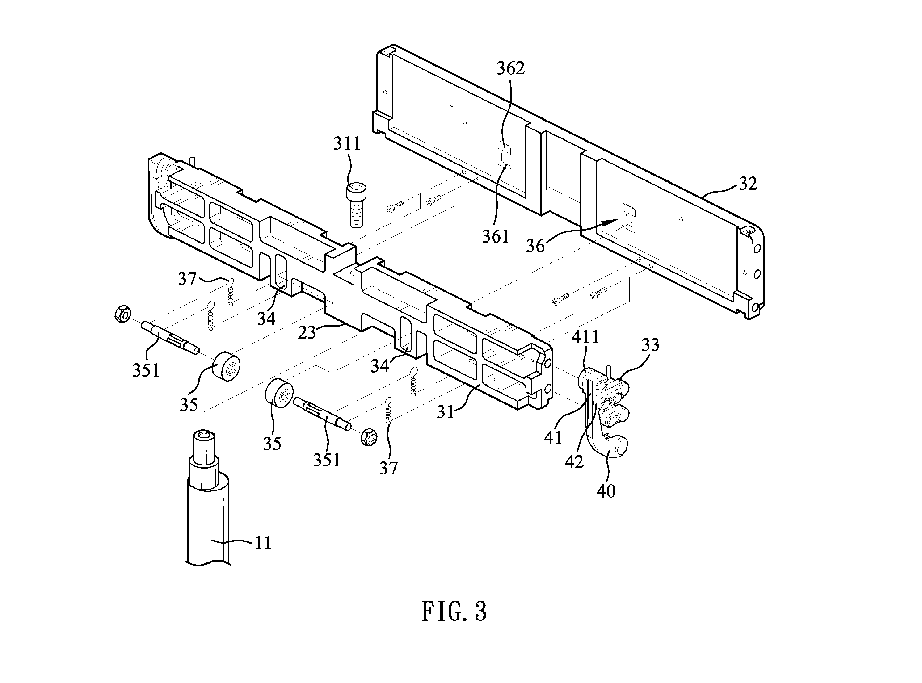

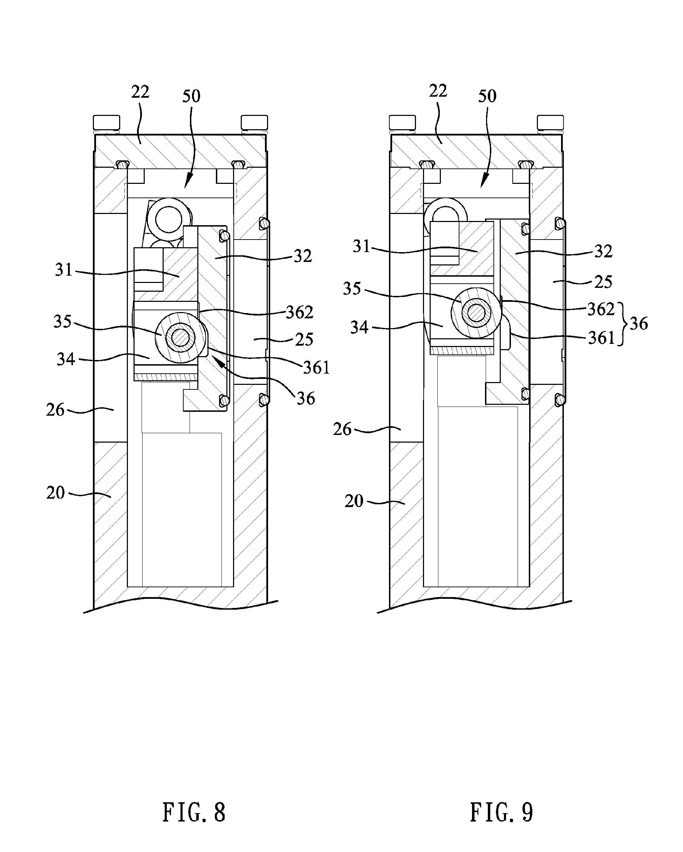

At least a through groove **34** is disposed between the two ends of the main gate board **31.** A roller bearing **35** is pivotally disposed in the through groove **34** by use of an axle **351,** and the roller bearing **35** partially protrudes on the lateral surface of the main gate board **31** adjacent to the air-tight gate board **32.** Furthermore, the air-tight gate board **32** is concavely provided with a push groove **36** for receiving the roller bearing **35.** The push groove **36** has a first section **361** and a second section **362,** wherein the depth of the first section **361** is deeper than the depth of the second section **362** (as shown in **Fig. 3** and **Fig. 8**), and the second section **362** is positioned at one end of the push groove **36** adjacent to the open end **21.**

One end of the press bar **40** is pivotally connected to an end part of the air-tight gate board **32,** while the other end of the press bar **40** extends toward the cover **22** to form a press end **41.** A bearing member **411** is disposed at the press end **41.** Therein, one end of a linkage bar **42** is pivotally connected to the middle of the press bar **40,** with the other end of the linkage bar **42** pivotally connected to an end of the main gate board **31.** Furthermore, as shown in **Fig. 3****,** the linkage bar **42** extends from the pivot junction between the linkage bar **42** and the main gate board **31** toward the direction away from the air-tight gate board **32,** and the press bar **40** is in a shape similar to an L shape. In the preferred embodiment, the two ends of the gate assembly **30** are provided with a press bar **40,** respectively.

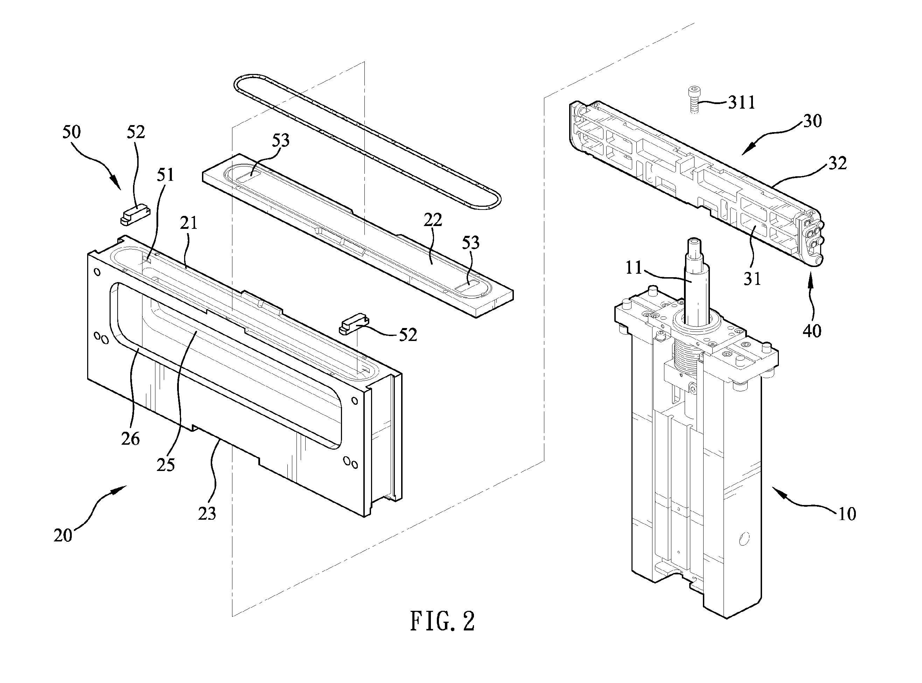

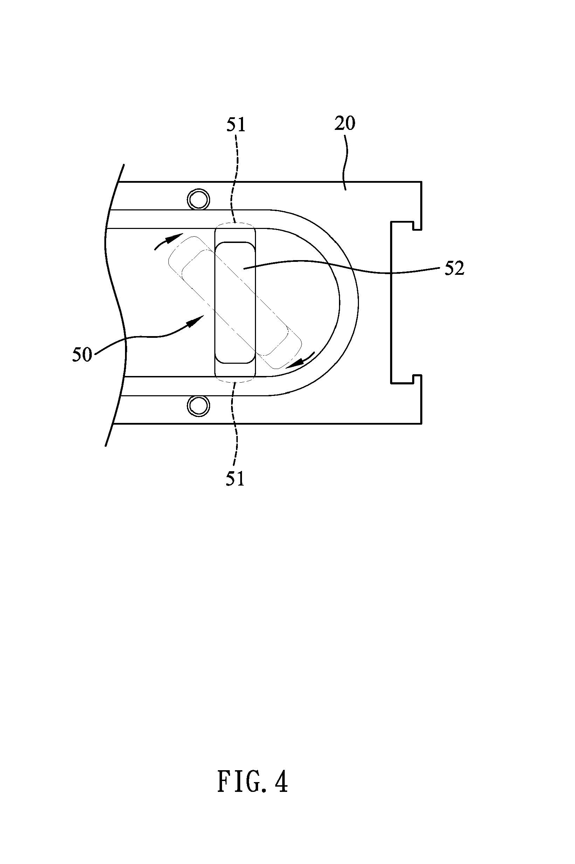

In addition, at least a stop member **50** is disposed at the open end **21** of the valve body **20.** Two inner walls of the open end **21** of the valve body **20** are provided with an arc recess **51** symmetrically disposed, respectively, for receiving the stop member **50;** further, two ends of the stop member **50** are both an arc-shaped end. Therein, the length of the stop member **50** is larger than the width of the opening of the open end **21.** As shown in **Fig. 4****,** the stop member **50** is obliquely placed into the open end **21** and subsequently rotated, so as to engage the two ends of the stop member **50** with the arc recess **51.** Furthermore, as shown in **Fig. 2****,** the stop member **50** is convexly provided with an engage end **52** toward the cover **22,** and the inner side of the cover **22** is concavely provided with at least a position groove **53** for receiving the engage end **52.** Therefore, when the cover **22** is fixed to the open end **21,** as shown in **Fig.+5,** the position groove **53** is able to fix the position of the stop member **50,** so as to prevent the stop member **50** from departing from the arc recess **51.**

Therein, at least a spring member **37** is disposed between the main gate board **31** and the air-tight gate board **32.** As shown in **Fig. 3****,** one end of the spring member **37** is connected to the axle **351** of the roller bearing **35,** while the other end is fastened to the air-tight gate board **32,** such that an elastic pulling force is produced for the air-tight gate board **32** to permanently lean against the main gate board **31.** In the preferred embodiment, the driving axle **11** is positioned at the center of the gate assembly **30,** while each side of the gate assembly **30** is provided with a roller bearing **35** and a push groove **36,** respectively, with two spring members **37** disposed on each of the axles **351,** respectively.

With the foregoing configuration, operation of the present invention will be illustrated below.

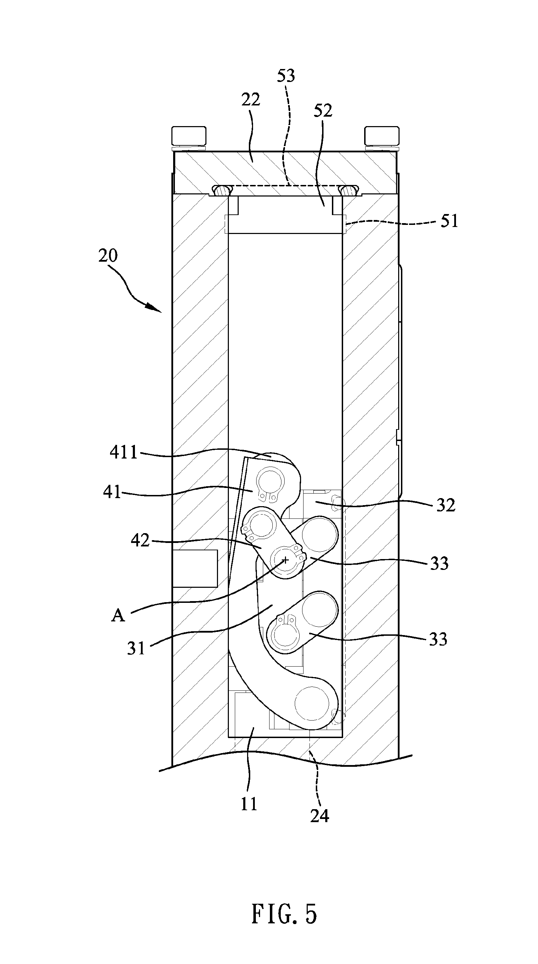

When the valve opening **25** opens, the gate assembly **30** is placed at one end of the valve body **20** in opposite to the open end **21,** and the air-tight gate board **32** leans against the main gate board **31,** as shown in **Fig. 5****.** Meanwhile, the roller bearing **35** is placed in the deeper first section **361** of the push groove **36.**

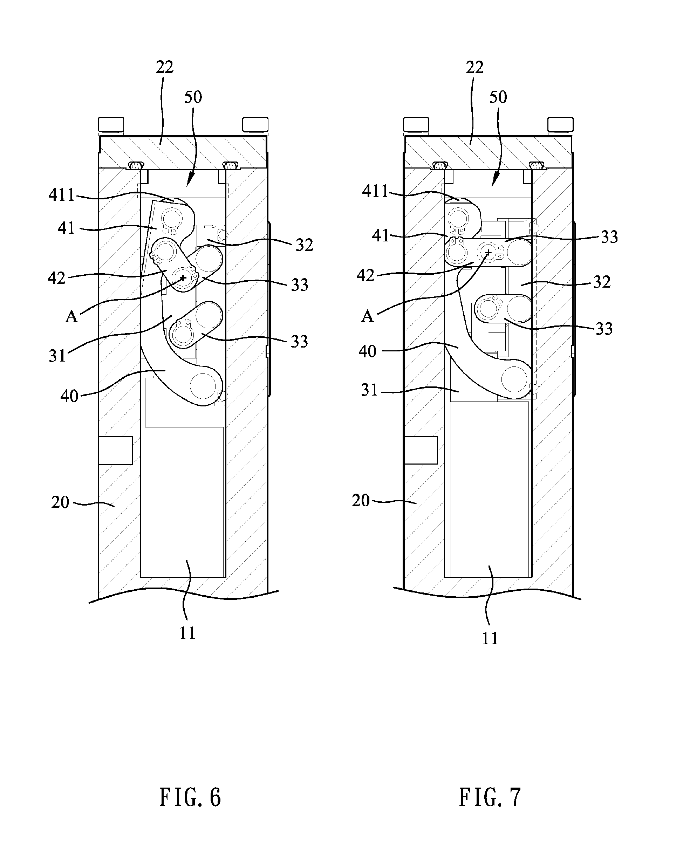

When the valve opening **25** is to be closed, the driving axle **11** of the power cylinder **10** drives the gate assembly **30** to axially move in parallel to the valve opening **25** along the driving axle **11** toward the open end **21,** as shown in **Fig. 6****.** When the gate assembly **30** is about to be in alignment with the valve opening **25,** the bearing member **411** of the press end **41** contacts the stop member **50;** with the continuous operation of the driving axle **11,** the stop member **50** imposes a counter force upon the press end **41,** so as to press the press bar **40.** Therein, due to the pivot junction between the linkage bar **42** and the main gate board **31** being a fixed central axle, when the press end **41** of the press bar **40** bears a pressing force, the linkage bar **42** swings counterclockwise with the pivot junction A as the central axle, whereby the press bar **40** pushes the air-tight gate board **32** away from the main gate board **31,** so as to cause the air-tight gate board **32** to move toward the valve opening **25** until the air-tight gate board **32** firmly seal the valve opening **25,** as shown in **Fig. 7****.**

At the same time, because the main gate board **31,** the two parallel linkages **33,** and the air-tight gate board **32** form a parallelogram linkage structure, when the press bar **40** pushes the air-tight gate board **32** to move, upper and lower ends of the air-tight gate board **32** are assured to move averagely, so as to make sure the air-tight gate board **32** leans against the valve opening **25** averagely. Thus, air-tightness is prevented from being weakened due to imbalance of the valve opening **25.**

Moreover, referring to **Fig. 8** and **Fig. 9****,** when the air-tight gate board **32** is operated, the roller bearings **35** accordingly move to the second sections **362** of the push grooves **36.** Also, due to the depth of the second sections **362,** when the air-tight gate boards **32** move away from the main gate board **31,** the roller bearings **35** remain leaning against the air-tight gate board **32.** Therefore, when the gate valve with linkage structure of the present invention is in a larger size, multiple roller bearings **35** and corresponding push grooves **36** are allowed to be disposed thereon, so as to disperse the counterforce born by the air-tight gate board **32,** thereby preventing the air-tight gate board **32** from being bent and deformed, assuring the air-tightness between the air-tight gate board **32** and the valve opening **25,** and increasing the stability and the service life of the present invention.

On the other hand, when the valve opening **25** is to be reversely opened, the power cylinder **10** triggers the driving axle **11** and the gate assembly **30** to descend. With the bearing member **411** of the press end **41** gradually departing from the stop member **50,** the spring members **37** causes the air-tight gate board **32** and the main gate board **31** to be repositioned to lean against each other by use of the elastic pulling force, such that the air-tight gate board **32** departs from the valve opening **25,** whereby the valve opening **25** is opened.

In addition, the maintenance of the present invention is easy and time saving. During the maintenance, user needs only to open the cover **22** and unscrew the screw members **311** between the gate assembly **30** and the driving axle **11,** whereby the whole gate assembly **30** is allowed to be taken out for repairing or replacing process, thus greatly shorten the time cost for work suspension during the machine maintenance.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A gate valve with linkage structure, comprising:
at least a power cylinder (10), provided with a driving axle (11) capable of axially moving;
a hollow valve body (20), with one end being an open end (21) having a cover (22) and the other end being a cylinder seat (23) for receiving the power cylinder (10), an axle bore (24) passing through the cylinder seat (23) for the driving axle (11) to penetrate into the valve body (20), wherein at least a valve opening (25) is disposed on a lateral side of the valve body (20) adjacent to the open end (21);
a gate assembly (30), disposed in the valve body (20) and provided with a main gate board (31) and an air-tight gate board (32) neighboring on the main gate board (31), while the main gate board (31) is connected to an end of the driving axle (11), wherein the main gate board (31) is connected with an end part of the air-tight gate board (32) by use of at least a parallel linkage (33); and
at least a press bar (40), with one end pivotally connected to an end part of the air-tight gate board (32) and the other end extending toward the cover (22) to form a press end (41), wherein one end of a linkage bar (42) is pivotally connected to the middle of the press bar (40), with the other end of the linkage bar (42) pivotally connected to an end of the main gate board (31).

2. The gate valve of claim 1, wherein the press end (41) is provided with a bearing member (411).

3. The gate valve of claim 1, wherein a stop member (50) is disposed at the open end (21) of the valve body (20).

4. The gate valve of claim 3, wherein the inner wall of the open end (21) of the valve body (20) is provided with two arc recesses (51) for receiving the stop member (50), while two ends of the stop member (50) are both an arc-shaped end.

5. The gate valve of claim 4, wherein the stop member (50) is convexly provided with an engage end (52) toward the cover (22), and the inner side of the cover (22) is provided with a position groove (53) for receiving the engage end (52).

6. The gate valve of claim 4, wherein the length of the stop member (50) is larger than the width of the opening of the open end (21).

7. The gate valve of claim 1, wherein at least a through groove (34) is disposed on the main gate board (31), and a roller bearing (35) is pivotally disposed in the through groove (34), while the roller bearing (35) partially protrudes on the lateral surface of the main gate board (31) adjacent to the air-tight gate board (32), with the air-tight gate board (32) concavely provided with a push groove (36) for receiving the roller bearing (35).

8. The gate valve of claim 7, wherein the push groove (36) is provided with a first section (361) and a second section (362), while the depth of the first section (361) is deeper than the depth of the second section (362), and the second section (362) is positioned at one end of the push groove (36) adjacent to the open end (21).

9. The gate valve of claim 1, wherein at least a spring member (37) is disposed between the main gate board (31) and the air-tight gate board (32).
